Europäisches Patentamt

European Patent Office

Office européen des brevets

(11) Veröffentlichungsnummer : **0 327 604 B1**

(19)

(12) # EUROPÄISCHE PATENTSCHRIFT

(45) Veröffentlichungstag der Patentschrift :
01.04.92 Patentblatt 92/14

(21) Anmeldenummer : 88904926.8

(22) Anmeldetag : 13.06.88

(86) Internationale Anmeldenummer :
PCT/DE88/00356

(87) Internationale Veröffentlichungsnummer :
WO 89/01065 09.02.89 Gazette 89/04

(51) Int. Cl.⁵ : **D03J 1/00,** D01H 11/00,
F15B 21/12

(54) **VORRICHTUNG ZUR VERMEIDUNG VON ABLAGERUNGEN VON FLUGFASERN.**

(30) Priorität : 25.07.87 DE 3724708
29.08.87 DE 3728910

(43) Veröffentlichungstag der Anmeldung :
16.08.89 Patentblatt 89/33

(45) Bekanntmachung des Hinweises auf die
Patenterteilung :
01.04.92 Patentblatt 92/14

(84) Benannte Vertragsstaaten :
IT

(56) Entgegenhaltungen :
DE-A- 1 919 229
DE-B- 1 025 178

(56) Entgegenhaltungen :
FR-A- 2 534 938
GB-A- 1 221 619
GB-A- 1 251 610
US-A- 3 878 869

(73) Patentinhaber : **Gebrüder Schmeing GmbH &
Co. KG
Holthausener Strasse 9
W-4280 Borken-Weseke (DE)**

(72) Erfinder : **DÜES, Theo
Jägerskamp 31
W-4422 Ahaus (DE)**

(74) Vertreter : **Habbel, Hans-Georg, Dipl.-Ing.
Postfach 3429 Am Kanonengraben 11
W-4400 Münster (DE)**

EP 0 327 604 B1

## Beschreibung

Die Erfindung bezieht sich auf eine Vorrichtung zur Vermeidung von Ablagerungen von Flugfasern gemäß dem Oberbegriff des Pattentanspruches 1.

Sogenannte Projektilwebmaschinen sind heute in immer größerem Umfang im Einsatz. Bei diesen Projektilwebmaschinen wird der die Spule mit sich tragende Webschütz durch ein Projektil ersetzt, das den Schußfaden ergreift und durch das Webfach zieht. Das Projektil wird dabei über seinen ganzen Weg an Führungszähnen geführt und, um dabei Verschleißerscheinungen an dem üblicherweise aus Metall bestehenden Projektil und den aus Metall bestehenden Führungszähnen zu vermeiden, wird das Projektil durch Aufsprühen eines Ölnebels geölt.

In Webereimaschinen ist bei der Verarbeitung von sogenannten "Gespinstgarnen" das Entstehen von Flugfasern niemals ausgeschlossen. Bei den Projektilwebmaschinen tritt dabei das Problem auf, daß die Flugfasern zumindest teilweise mit dem Ölnebel in Kontakt kommen und dann als ölgetränkte Flugfasern in das Gewebe geraten. Bei der nachfolgenden Behandlung des Gewebes, z. B. beim Färben, treten hier Fehler des Gewebes auf, die dazu führen, daß ganze Gewebebahnabschnitte verworfen werden müssen. Der Einsatz von Reinigungsmitteln vor der Weiterverarbeitung des Gewebes ist kostenaufwendig und bedingt neben den Kosten für das Reinigungsmittel einen hohen Aufwand an Personal.

Man hat diese Nachteile bereits erkannt und es ist aus der DE-OS 19 19 229 bekannt, ständig einen Luftstrom auf die Webmaschine zu richten. Dieser Luftstrom wird von entsprechend starken Gebläsen erzeugt, soll eine Geschwindigkeit von mehr als 300 m/min., vorzugsweise etwa 920 bis 6100 m/min. aufweisen und wird sowohl von oben auf die Maschine gerichtet als auch quer zur Maschine bewegt. Dabei sollen "puffende" Luftströme von 60 bis 1000 Intervallen pro Minute durch Gleitventilplatten erzeugt werden. Die konstant arbeitenden Gebläse haben den Nachteil, daß sie einen sehr hohen Energieverbrauch bedingen und daß mit dem im wesentlichen ständigen Luftstrom auch Ölnebel aufgewirbelt wird, der sich dann mit weiteren Flugfasern verbindet. Die ständige und großflächige Luftbewegung ist außerdem innerhalb des Webraumes außerordentlich unangenehm und zudem sind diese Aggregate sehr kostenaufwendig. Die bei der bekannten Anordnung erzeugten Luftstöße sind auch nicht explosionsartig stark genug, um eine wirksame Entfernung der ölgetränkten Fasern zu erreichen.

Die gleichen Probleme treten auch in Wirkmaschinen und Spinnereimaschinen auf. Auch in anderen Bereichen der Technik sind Probleme mit Flugfasern und Flugstaub nur schwer zu beherrschen.

Aus der gattungsbildenden FR-A-2 534 938 ist ebenfalls eine Reinigungsvorrichtung für Webmaschinen bekannt, die jedoch nicht ständig einen Luftstrom auf die Webmaschine richtet, sondern einzelne Luftstöße erzeugt. Dabei erfolgt jedoch kein Ausblasen hochgespannter Druckluft, sondern die Druckluftstärke hängt ausschließlich von dem in der Zuluftleitung herrschenden Druck ab. Dabei ist nachteilhaft, daß der zur Reinigung der Webmaschinen benötigte hohe Luftdruck direkt vom Drucklufterzeuger hergestellt werden muß, was energie- und kostenaufwendig ist und zu einer hohen Lärmbelästigung führt.

Ein Impulsgeber für periodisch arbeitende pneumatische Antriebe wird weiterhin in der DE-B-1 025 178 beschrieben, der über eine Druckluftwechselkammer verfügt. Bei dieser Vorrichtung wird jedoch die in der Wechselkammer enthaltene Luft nur zur Steuerung eines Entladeventils benutzt, und nicht zur explosionsartigen Erzeugung von Luftstößen.

Der Erfindung liegt die Aufgabe zugrunde, eine Vorrichtung zur explosionsartigen Erzeugung von Luftströmen zu schaffen, die leicht aufgebaut ist, leicht an beliebigen Stellen einer Webmaschine oder einer sonstigen Einrichtung installiert werden kann, kostengünstig ist und einen geringen Energieverbrauch bewirkt und dabei die innerhalb des Webraumes arbeitenden Bedienungspersonen nicht belästigt.

Diese der Erfindung zugrundeliegende Aufgabe wird durch die Lehre des Patentanspruches 1 gelöst.

Mit anderen Worten ausgedrückt, wird ein relativ kleiner örtlich begrenzter explosionsartiger Luftstoß erzeugt, der intermittierend nur auf die Bereiche der Webmaschine gerichtet wird, in denen die Flugfasern entstehen, insbesondere auf die Bereiche, in denen mit Ölnebel getränkte Flugfasern entstehen können. Durch das impulsweise kurze, aber sehr starke Anblasen wird ein einwandfreies Ablösen der Flugfasern erreicht, andererseits die in dem Webraum arbeitenden Personen nicht belästigt. Der hierfür erforderliche Luftverbrauch ist relativ niedrig, so daß die laufenden Energiekosten gering sind und schließlich wird ein Ansammeln von Flugfasern oder Flugfaserwolle verhindert.

Vorzugsweise betragen die Zeitimpulse zwischen zwei Reinigungsluftstößen etwa 40 Sekunden, wobei der kurze und in kurzen Intervallen erzeugte starke Reinigungsluftstoß ausreicht, die Maschine sauberzuhalten.

Vorteilhafte Ausgestaltungen sind in den Unteransprüchen erläutert.

Insbesondere beschäftigt sich die Erfindung schließlich mit der Erstellung einer Drossel für Druckluft, um damit von einer üblichen, beispielsweise 6 bar Druckluft enthaltenden Drucklufthauptleitung in einen Vorratsbehälter zu gehen, der intermittierende explosionsartige Druckluftstöße erzeugt.

2

Diese der Erfindung zugrundeliegende Aufgabe wird durch die Lehre der Ansprüche 9 und 10 gelöst.

Ausführungsbeispiele der Erfindung werden nachfolgend anhand der Zeichnungen erläutert. Die Zeichnungen zeigen dabei in

Fig. 1 schematisch eine Schnittdarstellung der Vorrichtung zur Erzeugung explosionsartiger Druckluftstöße in einer ersten Stellung eines Umschaltventiles, in

Fig. 2 die Vorrichtung gemäß Fig. 1 in einer anderen Stellung des Umschaltventiles, in

Fig. 3 eine ergänzte Ausführungsform zur Beschickung mehrerer Druckluftabgabedüsen unter Einsatz einer Drossel und eines Umschaltventiles, in

Fig 4 eine Düse mit Anschlußschlauch und in den

Fig. 5 und 6 eine abgeänderte Ausführungsform eines 3/2 Wegeschieberventils.

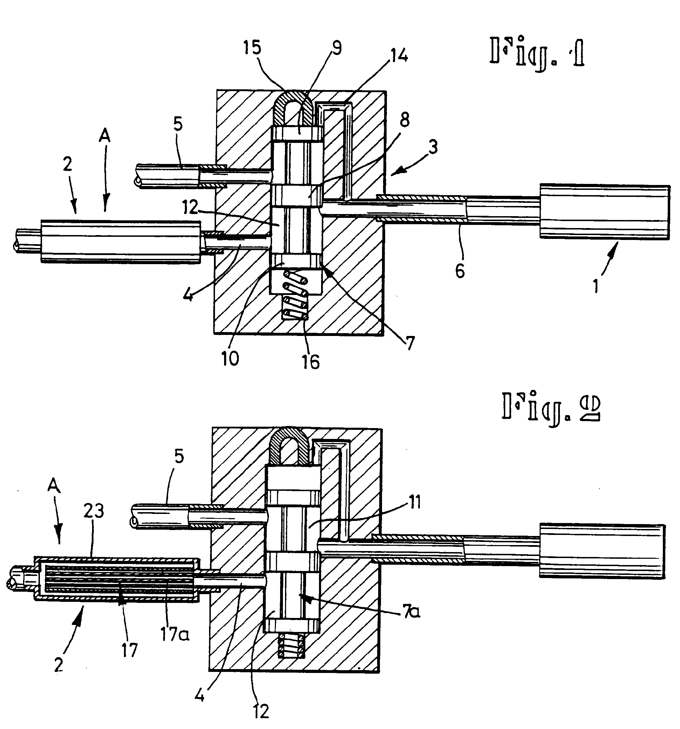

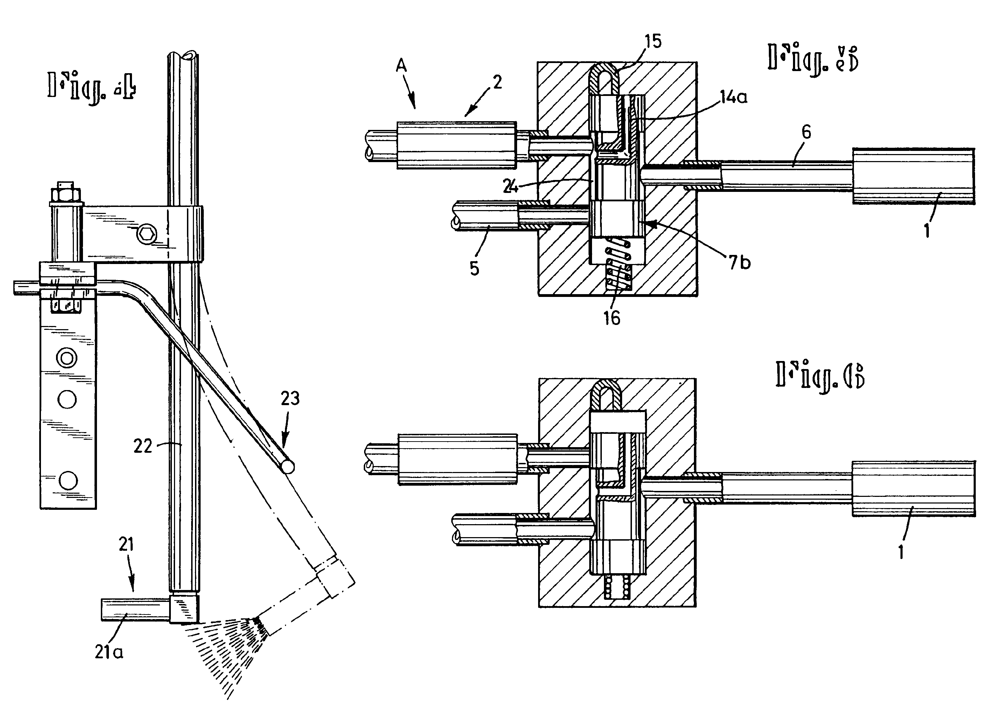

In Fig. 1 ist mit 1 ein Vorratsbehälter für ein Druckluftstoßvolumen bezeichnet, wobei dieser Vorratsbehälter 1 an eine Druckluftzuführungsleitung A angeschlossen ist. Zwischen die Druckluftzuführungsleitung A und dem Vorratsbehälter 1 ist eine Drossel 2 eingeschaltet und ein Umschaltventil 3. Die Drossel 2 führt über eine Druckluftzuführungsleitung 4 in das eigentliche Ventilgehäuse, in welchem ein als 3/2 Wegeschieberventil ausgebildeter Schieberkörper 7 beweglich ist. Von dem den Schieberkörper 7 aufnehmenden Raum führt eine Verbindungsleitung 6 zu dem Vorratsbehälter 1 und weiterhin führt von dem den Schieberkörper 7 aufnehmenden Raum eine Druckluftabführungsleitung 5 zu einer in der Zeichnung schematisch in Fig. 4 dargestellten Düse 21, durch die die erzeugten Druckluftstöße auf die gewünschte Bearbeitungsstelle gerichtet sind. Die Düse 21 kann dabei als Schwenkdüse ausgebildet sein, derart, daß sie aus einem Kunststoffschlauchstück 22 besteht, an welches sich rechtwinklig das Düsenmundstück 21a anschließt, wobei durch die Rückstoßkraft nunmehr bei Austritt des Druckluftstoßes sich dieses Düsenmundstück 21a bewegt und damit den Druckluftstrahl etwas verteilt. Die Bewegung wird durch einen Anschlag 23 begrenzt.

Der eigentliche Schieberkörper 7 im Umschaltventil 3 ist gemäß Fig. 1 bis 3 als Dreikolbenschieber 7a ausgebildet, der einen unteren Kolbenring 10, einen mittleren Kolbenring 8 und einen oberen Kolbenring 9 aufweist, wobei zwischen diesen Kolbenringen 9 und 8 bzw. 8 und 7 die Durchflußkanäle 11 und 12 geschaffen werden.

Der mittlere Kolbenring 8 verschiebt sich bei der Bewegung des Schieberkörpers 7a dabei vor der Öffnung der Verbindungsleitung 6 derart, daß entweder diese Öffnung der Verbindungsleitung 6 mit dem Durchflußkanal 11 und damit mit der Druckluftabführungsleitung 5 in Verbindung steht (Fig. 2) oder mit dem Durchflußkanal 12, so daß die Druckluftzuführungsleitung 4 mit der Verbindungsleitung 6 in Verbindung steht (Fig. 1).

Von der Verbindungsleitung 6 führt eine Bypaßleitung 14 auf die Oberseite des Kolbenringes bzw. Ringkolbens 9.

Im Bereich des Kolbenringes 9 ist ein Magnet 15 angeordnet und der eigentliche Schieberkörper 7a besteht aus ferromagnetischem Material, so daß normalerweise der Schieberkörper 7a in der in Fig. 1 dargestellten Stellung durch den Magneten 15 gehalten wird.

An der Unterseite des Kolbenringes 10 bzw. Ringkolbens ist eine Feder 16 vorgesehen, die eine Rückführung des Schieberkörpers 7 aus der in Fig. 2 dargestellten Arbeitsstellung in die in Fig. 1 dargestellte Arbeitsstellung unterstützt.

Die eigentliche Drossel 2 besteht gemäß einem wesentlichen und bedeutenden Merkmal der Erfindung aus einem Abschnitt eines Kabels 17, das z. B. aus Drahtseelen in an sich bekannter Weise besteht, d. h. aus Einzeldrähten 17a, die z. B. verdrillt sein können wie bei einem Elektrokabel. Dieses Kabel 17 ist mit seinem Kabelmantel innerhalb einer Ummantelung 23 angeordnet, derart, daß auf die Außenseite dieses Kabels 17, d. h. des Kabelmantels der in der Druckluftzuführungsleitung A herrschende Druck wirkt, andererseits der Innenraum des Kabels 17 aber mit der Druckluftzuführungsleitung A und der Leitung 4 in Verbindung steht, so daß ein Aufblähen des Mantels des Kabels nicht eintreten kann.

Die Wirkungsweise dieser vorbeschriebenen Einrichtung ist wie folgt:

Die von dem in der Zeichnung nicht dargestellten Drucklufterzeuger in der Druckluftzuführungsleitung A erzeugte Druckluft wird durch die Drossel 2 geführt und strömt gemäß Fig. 1 in den Durchflußkanal 12 des Dreikolbenschiebers 7a und von dort durch die Verbindungsleitung 6 in den Vorratsbehälter 1. Hat sich nach einiger Zeit, die von der Drosselwirkung der Drossel 2 abhängig ist, ein entsprechender Druck in dem Vorratsbehälter 1 aufgebaut, so wirkt dieser Druck über die Bypaßleitung 14 auf die Oberseite des Kolbenringes 9 des Dreikolbenschiebers 7a, und hat dieser Druck eine solche Größe erreicht, daß er die Haftkraft des Magneten 15 überwinden kann, wird schlagartig der Dreikolbenschieber 7a nach unten bewegt und dann gelangt der Kolbenring 8 unter die Mündung der Verbindungsleitung 6 und schließt damit die Verbindungsleitung 6 gegenüber der Druckluftzuführungsleitung A bzw. 4 ab und der Durchflußkanal 11 öffnet sich zum Durchfluß der im Vorratsbehälter 1 gespeicherten Druckluft zur Druckluftabführungsleitung 5 (Fig. 2).

Sobald sich der Druck im Vorratsbehälter 1 gesenkt hat, bewirkt die Feder 16 eine Rückführung des Dreikolbenschiebers 7a, unterstützt auf dem letzten Teil des Weges durch die Zugkraft des Magneten 15, und dann wird die Stellung des Dreikolbenschiebers 7a wieder erreicht, die in Fig. 1 dargestellt ist, d.h. der Vorratsbehälter 1 kann sich wieder mit Druckluft füllen.

Es ist offensichtlich, daß die Zeitdauer, die benötigt wird, um den Vorratsbehälter 1 mit Druckluft zu füllen, von der Drossel 2 abhängig ist und durch entsprechende Wahl der Länge, z. B. eines Elektrokabels 17 kann nunmehr diese Zeit beliebig bestimmt werden. Während also ein langsames Füllen des Vorratsbehälters 1 erreicht wird, wird gleichzeitig ein schlagartiges Entleeren des Vorratsbehälters 1 sichergestellt und dadurch der gewünschte explosionsartige Druckstoß erzeugt.

Bei der Ausführungsform nach Fig. 5 ist das 3/2 Wegeschieberventil mit nur zwei Kolben ausgebildet, und die Bypaßleitung ist als Bypaßleitung 14a innerhalb des Kolbenschiebers 7b vorgesehen.

Bei dieser Ausführungsform gelangt die von der Druckluftzuführungsleitung A erzeugte Druckluft über die Drossel 2 und den zwischen den beiden Kolben gebildeten Ringraum 24 zur Verbindungsleitung 6 (Fig. 5). Hat sich nach einiger Zeit, die von der Drosselwirkung der Drossel 2 abhängig ist, ein entsprechender Druck in dem Vorratsbehälter 1 aufgebaut, so wirkt dieser Druck über die Bypaßleitung 14a auf die Oberseite des oberen Kolbens. Hat dieser Druck eine solche Größe erreicht, daß er die Haftkraft des Magneten 15 überwinden kann, wird schlagartig der Kolbenschieber 7b nach unten bewegt, und der untere Kolben gibt dann die Mündung mit der Druckluftabführungsleitung 5 frei (s. Fig. 6).

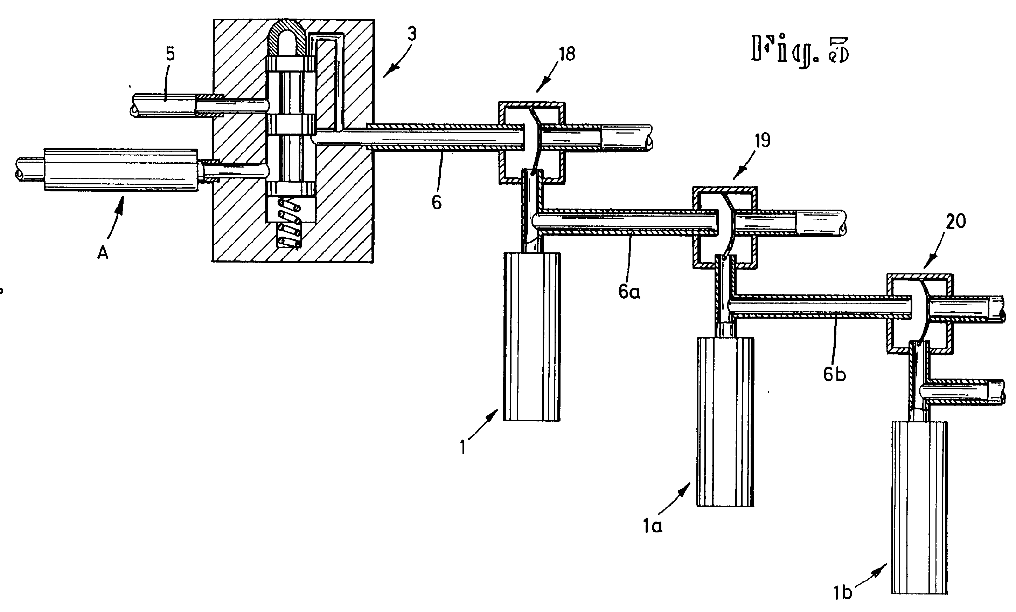

Mit der erfindungsgemäßen Einrichtung ist es möglich, mehrere Düsenmundstücke 21 zu betreiben, so wie dies in Fig. 3 dargestellt ist. An die in den Fig. 1 und 2 dargestellte Steuereinrichtung schließt sich dann zwischen jedem Vorratsbehälter 1, 1a oder 1b ein Schnellentlüftungsventil 18, 19, 20 bekannter Bauart an, so daß ein gleichzeitiges Füllen der einzelnen Vorratsbehälter 1, 1a, 1b möglich ist, aber dann bei Umschalten des Dreikolbenschiebers 7a ein nahezu gleichzeitiges Umschalten der Schnellentlüftungsventile 18 bis 20 erfolgt, so daß die Explosionsstöße der Druckluft nahezu gleichzeitig an vielen Stellen erzeugt werden.

## Patentansprüche

1. Vorrichtung zur Vermeidung von Ablagerungen von Flugfasern mit einem Drucklufterzeuger zur explosionsartigen Erzeugung von Luftstößen mit einer Druckluftzuführungsleitung (4), einem vom Drucklufterzeuger gespeisten Vorratsbehälter (1), einer zwischen dem Drucklufterzeuger und dem Vorratsbehälter (1) eingeschalteten Drossel (2) und einer Druckluftabführungsleitung (5), dadurch gekennzeichnet, daß der Vorratsbehälter (1) das gewünschte Stoßvolumen beinhaltet und ein zwischen die Drossel (2) und den Vorratsbehälter (1) eingeschaltetes Umschaltventil (3), das mit der Druckluftzuführungsleitung (4), der zu einer Düse (21) führenden Druckluftabführungsleitung (5) und einer Verbindungsleitung (6) zum Vorratsbehälter (1) ausgerüstet ist, wobei die Verbindungsleitung (6) durch die Stellung eines innerhalb des Umschaltventiles (3) angeordneten Drei/Zweiwegeschiebers (7) mit der Druckluftzuführungsleitung (4) oder der Druckluftabführungsleitung (5) in Verbindung steht, wobei zwischen der Oberseite des Drei/Zweiwegeschiebers (7) und der Verbindungsleitung (6) ein Bypaßkanal (14, 14a) vorgesehen und oberhalb des Drei/Zweiwegeschiebers (7) ein Magnet (15) angeordnet ist und der Schieberkörper aus ferromagnetischem Werkstoff besteht, wobei auf die untere Seite des Drei/Zweiwegeschiebers (7) eine Druckfeder (16) einwirkt.

2. Vorrichtung nach Anspruch 1, dadurch gekennzeichnet, daß das Umschaltventil (3) als Dreikolbenschieber (7a) ausgebildet ist, dessen mittlerer Kolbenring (8) vor der Mündung der Verbindungsleitung (6) beweglich ist, derart, daß der zwischen einem oberen Kolbenring (9) und dem mittleren Kolbenring (8) gebildete Durchflußkanal (11) die Verbindungsleitung (6) mit der Druckluftabführungsleitung (5) verbinden kann oder der zwischen dem unteren Kolbenring (10) und dem Kolbenring (8) gebildete Durchflußkanal (12) die Verbindungsleitung (6) mit der Druckluftzuführungsleitung (4) verbinden kann (Fig. 1 und 2).

3. Vorrichtung nach Anspruch 1, dadurch gekennzeichnet, daß das Umschaltventil (3) als Zweikolbenschieber (7b) ausgebildet ist (Fig 5 und 6).

4. Vorrichtung nach einem oder mehreren der vorhergehenden Ansprüche, dadurch gekennzeichnet, daß die Düse (21) als Schwenkdüse ausgebildet ist und aus einem Kunststoffschlauchstück (22) besteht, an welches sich im wesentlichen rechtwinklig das Düsenmundstück (21a) anschließt.

5. Vorrichtung nach einem oder mehreren der vorhergehenden Ansprüche, dadurch gekennzeichnet, daß hinter dem Umschaltventil (3) mehrere Vorratsbehälter für das Stoßvolumen (1, 1a, 1b) eingeschaltet sind, wobei zwischen der Verbindungsleitung (6, 6a, 6b) und den Vorratsbehälter (1, 1a, 1b) jeweils ein Schnellentlüftungsventil (18, 19, 20) eingeschaltet ist.

6. Vorrichtung nach einem oder mehreren der vorhergehenden Ansprüche dadurch gekennzeichnet, daß die Drossel (2) aus einem Kabelabschnitt (17) besteht.

7. Vorrichtung nach Anspruch 6, dadurch gekennzeichnet, daß der Abschnitt (17) in der Druckluftzuführungshauptleitung (A) angeordnet ist und der in der Druckluftzuführungshauptleitung (A) herrschende Druck auch auf die Außenseite des Kabelabschnittes (17) wirkt.

## Claims

1. Device for avoiding deposits of fly fibre, with a compressed air generator for explosive-like generation of air blasts with a compressed air supply line (4), a storage tank (1) fed from the compressed air generator, a restrictor (2) inserted between the compressed air generator and the storage tank (1), and a compressed air discharge line (5), characterised in that the storage tank (1) contains the required blast volume, and a reversing valve (3), which is inserted between the restrictor (2) and the storage tank (1) and which is equipped with the compressed air supply line (4), the compressed air discharge line (5) leading to a nozzle (21) and a connecting line (6) to the storage tank (1), in which the connecting line (6) is connected by the position of a three/two-way slider (7), located inside the reversing valve (3), to the compressed air supply line (4) or to the compressed air discharge line (5), in which a by-pass channel (14, 14a) is provided between the top of the three/two-way slider (7) and the connecting line (6) and a magnet (15) is located above the three/two-way slider (7) and the slider body consists of ferromagnetic material, in which a pressure spring (16) acts on the bottom of the three/two-way slider (7).

2. Device according to Claim 1, characterised in that the reversing valve (3) is formed as a three-piston slider (7a) the central piston ring (8) of which moves in front of the opening of the connecting line (6) in such way that the flow channel (11) formed between an upper piston ring (9) and the central piston ring (8) can connect the connecting line (6) to the compressed air discharge line (5), or the flow channel (12) formed between the lower piston ring (10) and the piston ring (8) can connect the connecting line (6) to the compressed air supply line (4) (Figs. 1 and 2).

3. Device according to Claim 1, characterised in that the reversing valve (3) is formed as a two-piston slider (7b) (Figs. 5 and 6).

4. Device according to one or more of the preceding claims, characterised in that the nozzle (21) is formed as a swivelling nozzle and consists of a piece of plastic tubing (22) to which the nozzle mouth piece (21a) is connected essentially at right angles.

5. Device according to one or more of the preceding claims, characterised in that a plurality of storage tanks for the blast volume (1, 1a, 1b) are inserted behind the reversing valve (3), a quick-action vent valve (18, 19, 20) being inserted in each case between the connecting line (6, 6a, 6b) and the storage tank (1, 1a, 1b ).

6. Device according to one or more of the preceding claims, characterised in that the restrictor (2) consists of a cable section (17).

7. Device according to Claim 6, characterised in that the section (17) is located in the main compressed air supply line (A) and the pressure prevailing in the main compressed air supply line (A) also acts on the outside of the cable section (17).

## Revendications

1. Dispositif pour éviter la formation de dépôts de fibres volantes dans un compresseur d'air pour produire des souffles d'air sous forme d'explosions, comprenant une conduite d'amenée d'air comprimé (4), un accumulateur (1) alimenté par le compresseur d'air, un étrangleur (2) intercalé entre le compresseur d'air et l'accumulateur (1) et une conduite de sortie d'air comprimé (5), caractérisé en ce que l'accumulateur (1) contient le volume du souffle d'air désiré, et en ce qu'une soupape de commutation (3) est montée entre l'étrangleur (2) et l'accumulateur (1) et est reliée à la conduite d'amenée d'air comprimé (4), à la conduite de sortie de l'air comprimé (5) qui va vers une buse (21), ainsi qu'à une conduite de raccordement (6) à l'accumulateur (1), la conduite de raccordement (6) communiquant par la position d'un distributeur à tiroir trois voies/deux voies (7), situé dans la soupape de commutation (3), soit avec la conduite d'amenée d'air comprimé (4) soit avec la conduite de sortie d'air comprimé (5), une voie de dérivation (14, 14a) étant prévue entre la partie supérieure du distributeur à tiroir trois voies/deux voies (7) et la conduite de raccordement (6), et un aimant (15) étant placé au-dessus du distributeur à tiroir trois voies/deux voies (7), et en ce que le corps du distributeur est fait de matière ferromagnétique, un ressort de pression (16) agissant sur le fond du distributeur à tiroir trois voies/deux voies (7).

2. Dispositif suivant la revendication 1, caractérisé en ce que la soupape de commutation (3) est conçue sous forme de distributeur à tiroir à trois pistons (7a), le segment de piston central (8) pouvant se déplacer devant l'orifice de la conduite de raccordement (6) de telle manière qu'un passage (11) formé entre un segment de piston supérieur (9) et le segment de piston central (8) puisse faire communiquer la conduite de raccordement (6) avec la conduite de sortie d'air comprimé (5) ou qu'un passage (12) formé entre le segment de piston inférieur (10) et le segment de piston central (8) puisse faire communiquer la conduite de raccordement (6) avec la conduite d'amenée d'air comprimé (4) (figures 1 et 2).

3. Dispositif suivant la revendication 1, caractérisé en ce que la soupape de commutation (3) est conçue sous forme de distributeur à tiroir à deux pistons (7b) (figures 5 et 6).

4. Dispositif suivant l'une des revendications précédentes, caractérisé en ce que la buse (21) est conçue sous forme de buse pivotante et en ce qu'elle se compose d'un morceau de tuyau en matière plastique (22) auquel se raccorde sensiblement à angle droit l'ajutage de buse (21a).

5. Dispositif suivant l'une des revendications précédentes, caractérisé en ce que plusieurs accumulateurs (1, 1a, 1b) sont montés derrière la soupape de commutation (3), une soupape d'échappement rapide (18, 19, 20) étant chaque fois intercalée entre la conduite de raccordement (6, 6a, 6b) et l'accumulateur (1, 1a, 1b).

6. Dispositif suivant l'une des revendications précédentes, caractérisé en ce que l'étrangleur (2) se compose d'un tronçon de câble (17).

7. Dispositif suivant la revendication 6, caractérisé en ce que le tronçon de câble (17) est situé dans la conduite principale d'amenée d'air comprimé (A) et en ce que la pression régnant dans la conduite principale d'amenée d'air comprimé (A) agit aussi sur l'extérieur du tronçon de câble (17).

Fig. 1

Fig. 2

Fig. 5

EP 0 327 604 B1

Fig. 9a

Fig. 9b

Fig. 10